# EUROPEAN PATENT SPECIFICATION

(11) **EP 3 496 926 B1**
(45) Date of publication and mention of the grant of the patent: **05.08.2020**
(21) Application number: 18769734.7
(22) Date of filing: 21.09.2018
(51) Int. Cl.: B29C 45/23, B29C 45/47

(54) **INJECTOR FOR INJECTION MOLDING**
INJEKTOR ZUM SPRITZGIESSEN
INJECTEUR POUR MOULAGE PAR INJECTION

(30) Priority: 17.10.2017 IT 201700117212
(43) Date of publication of application: 19.06.2019
(73) Proprietor: FA. IN. PLAST. - FARAOTTI INDUSTRIE PLASTICHE - S.R.L., 63100 Ascoli Piceno (AP) (IT)
(72) Inventor: FRATINI, Vladimiro, 63100 Ascoli Piceno (AP) (IT)
(74) Representative: Cutropia, Gianluigi
(86) International application number: PCT/EP2018/075596
(87) International publication number: WO 2019/076578

(56) References cited:
- GB-A- 1 306 697
- JP-A- 2002 355 855
- JP-U- S57 125 314
- JP-U- S63 170 216

## Description

The present patent application relates to an injector for the injection molding of plastic materials, such as for example expandable crosslinkable ethylene copolymers compounds, in particular for the production of footwear components, such as bottoms and soles.

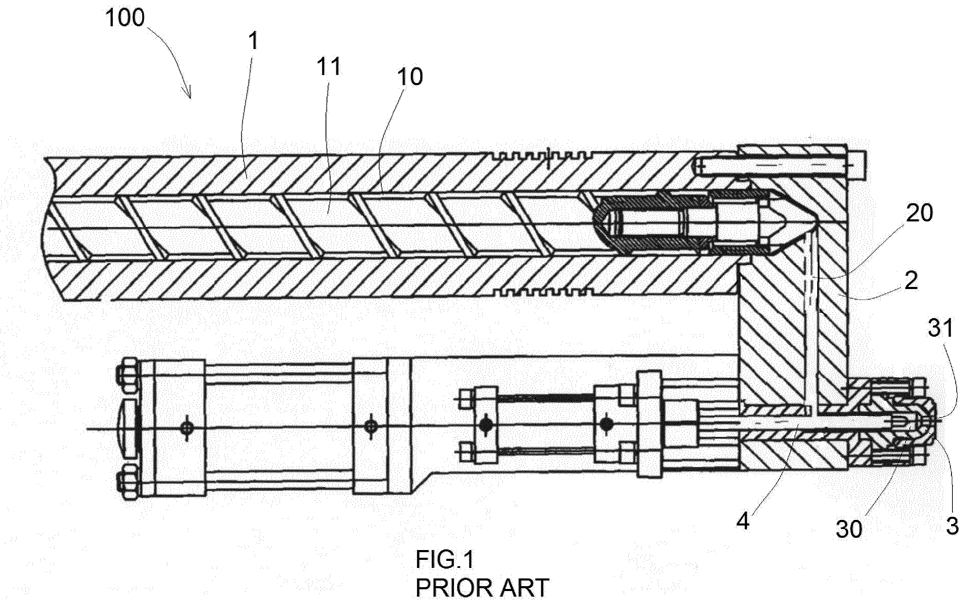

Fig.1 shows an injector (100) according to the prior art. The injector (100) comprises a plasticizing cylinder (1) with a plasticizing chamber (10) wherein a plasticizing screw (11) is disposed.

The plasticizing screw (11) can be rotated and translated. The plasticizing screw (11) is actuated by an electrical motor or a hydraulic motor, which is not shown in the figures.

The plasticizing chamber (10) is in communication with a feeding duct (20) obtained in a manifold (2).

The feeding duct (20) is in communication with a discharge duct (30) obtained in an injection nozzle (3) suitable for being coupled with a mold where vacuum is obtained.

A needle (4) moves axially in the discharge duct (30), said needle (4) being suitable for closing an outlet hole (31) of the discharge duct.

The needle (4) is actuated by an actuator (40), such as for example a linear actuator composed of a cylinder-piston assembly.

Fig.2 shows the needle (4) in retracted position, wherein the outlet hole (31) of the discharge duct is open.

Fig.3 shows the needle (4) in advanced position, wherein the outlet hole (31) of the discharge duct is closed.

A plastic material, generally in the form of granules, is fed in the plasticizing chamber (10) of the plasticizing cylinder. The plasticizing cylinder (1) is heated to a temperature of approximately 100° in such a way to melt the plastic material. The plasticizing screw (11) is rotated in such a way as to mix the plastic material, forming a pasty material in semi-solid state, and is moved backwards until the desired volume of material is loaded.

The pasty material fills the feeding duct (20) of the manifold and the discharge duct (30) of the injection nozzle (3).

During the injection, the injection nozzle (3) is positioned on the mold, in such a way that the discharge duct (30) of the injection nozzle communicates with an injection channel obtained in the mold and communicating with a cavity of the mold having the same shape as the product to be obtained. Initially, the needle (4) closes the discharge duct.

The plasticizing screw (11) is moved forward and the needle (4) is moved backward in the discharge duct, in such a way to permit the flow of the plastic material that comes out of the injection nozzle (3) and enters the injection channel of the mold in order to fill the cavity of the mold.

The plastic material in the mold is subject to a molding process that generally consists in an expansion and cross-linking step at a controlled temperature. Then, the mold is opened and the molded product is extracted, being subject to a thermo-shrinking process outside the mold until the ambient temperature is reached. The dimensions of the product can be controlled with a template during the thermo-shrinking process.

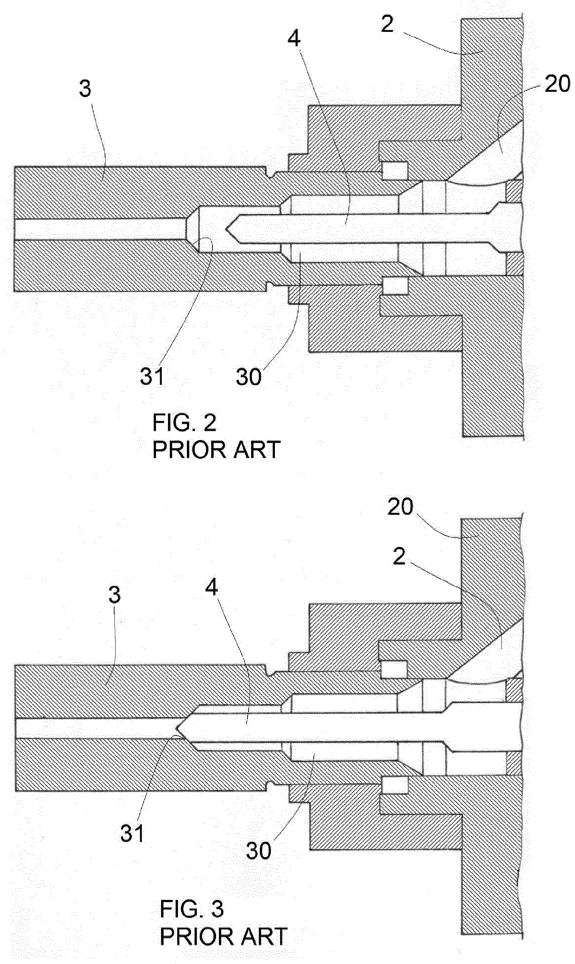

As shown in Figs. 2 and 3, the diameter of the needle (4) is lower than the diameter of the discharge duct (30).Therefore, a gap is formed between the external surface of the needle (4) and the internal surface of the discharge duct (30).

Said gap can get filled with air if the coupling between the injection nozzle and the mold is not perfect.

An empty cylinder with the dimensions of the needle is created when the needle (4) is moved backward inside the discharge duct (30). If said empty cylinder is closed before evacuating the plastic material from the discharge duct (30), because of the underpressure of the cavity of the mold, air is trapped in said empty cylinder.

Consequently, when the plastic material is injected in the mold, the air that was contained in the discharge duct (30) is trapped in the plastic material.

During the molding process, the air trapped in the plastic material tends to create bubbles or channels that impair the quality of the product, for example, during the milling step of the molded product, thus obtaining a finished product with poor quality that is to be rejected.

JP2002355855 discloses an injection nozzle for injecting the molding material into a mold. The injection nozzle comprises a passage duct for the molding material, which comprises an outlet hole in lower position and a needle that is moved axially in the passage duct in order to close the outlet hole of the passage duct. A gap is provided between the needle and the passage duct. The injection nozzle comprises projections disposed in the passage duct in correspondence of the outlet hole. The projections protrude radially from the internal wall of the discharge duct, extending into the gap, in such a way as to guide the movement of the needle.

GB1306697 discloses an injector for injection molding, which comprises a plasticizing cylinder with a plasticizing screw, an injection nozzle with a discharge duct and a needle that is moved axially in the discharge duct in order to close an outlet hole of the discharge duct. The injection nozzle comprises projections that protrude radially outwards from the need in order to guide the sliding movement of the needle in the discharge duct.

The projections described in JP2002355855 and in GB1306697 do not have suitable dimensions to appropriately reduce the volume of the gap. In fact, said projections act as guide for the sliding movement of the needle in the duct of the nozzle and therefore tend to wear out because of continuous mutual friction.

**JPS57125314 (U) discloses an injector for injection molding according to the preamble of claim 1.**

**JPS63170216 (U) discloses an injector for injection molding having a cone shaped part of the needle.**

The purpose of the present invention is to eliminate the drawbacks of the prior art by disclosing an injector for injection molding that is capable of minimizing the quantity of air trapped by the plastic material or favoring the evacuation of the air from the material during the injection through the injector, without suffering any wear over time.

Another purpose of the present invention is to disclose such an injector for injection molding that is effective, efficacious and capable of guaranteeing a high quality of the molded product, while minimizing production waste.

Another purpose of the present invention is to disclose such an injector for injection molding that is inexpensive and easy to make.

These purposes are achieved according to the invention with the characteristics of the independent claim 1.

Advantageous embodiments of the invention appear from the dependent claims.

The injector for molding according to the invention is defined by the independent claim 1.

In view of the above, a minimum quantity of air is trapped in the molded plastic material, thus not impairing the quality of the molded product. At the same time, the wear of the needle, the tongues and the internal walls of the discharge duct is avoided.

Moreover, discontinuity lines are produced in the plastic material for a better evacuation of the air that may be eventually trapped.

Additional features of the invention will appear clearer from the detailed description below, which refers to its merely illustrative, not limiting embodiments shown in the attached drawings, wherein:
Fig. 1 is an axial view of an injector according to the prior art;
Fig. 2 is an axial view of an injector of the prior art, in correspondence of a discharge channel, which shows a needle in retracted position;
Fig. 3 is the same view as Fig. 2, except for it shows the needle in advanced position;

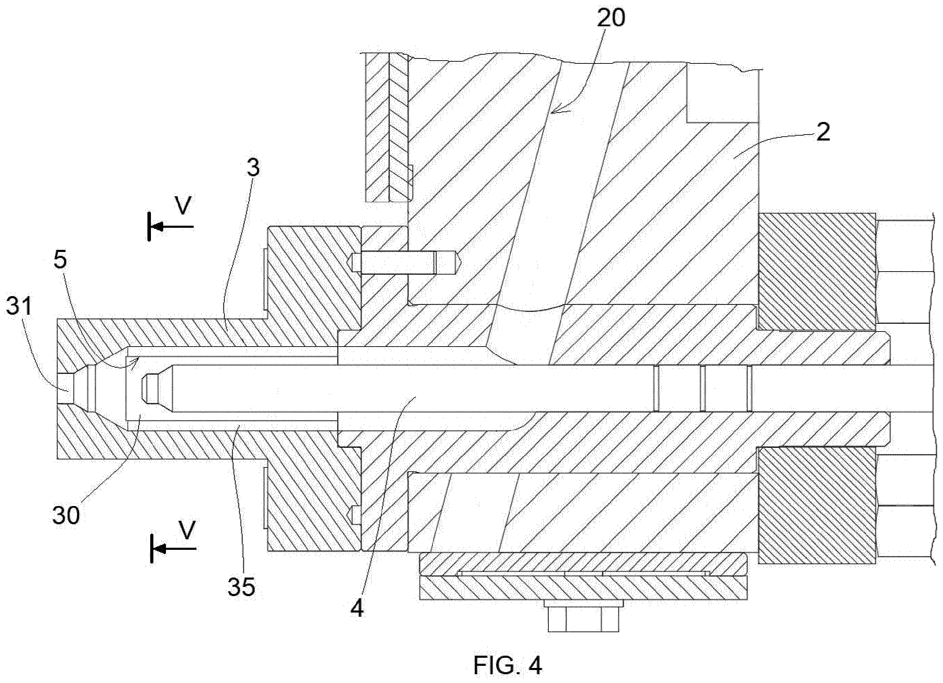

Fig. 4 is an axial view of an injector according to a first embodiment of the invention, in correspondence of the discharge channel, which shows the needle in retracted position;

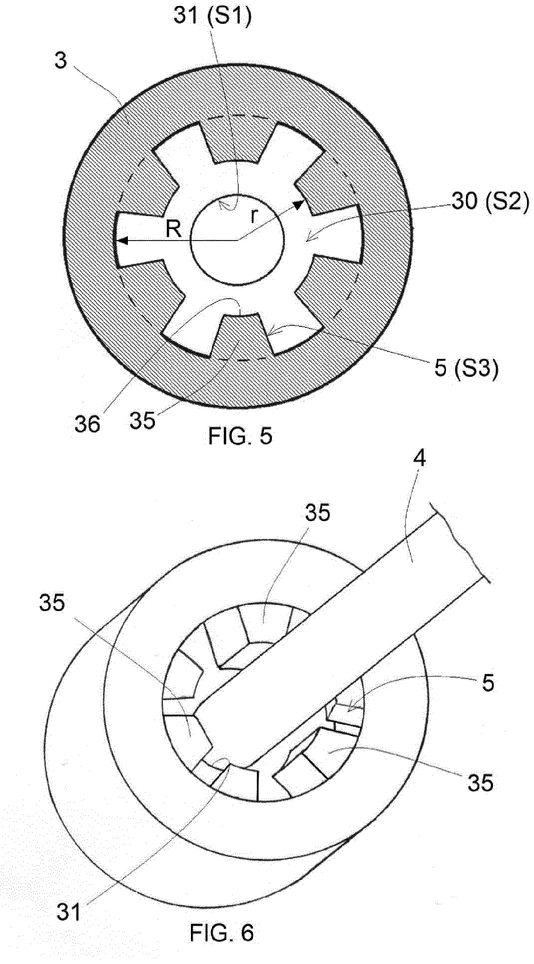

Fig. 5 is a cross-sectional view taken along the plane V-V of Fig. 4;
Fig. 6 is a perspective view of a portion of the injector of Fig. 5, which shows the needle in advanced position;

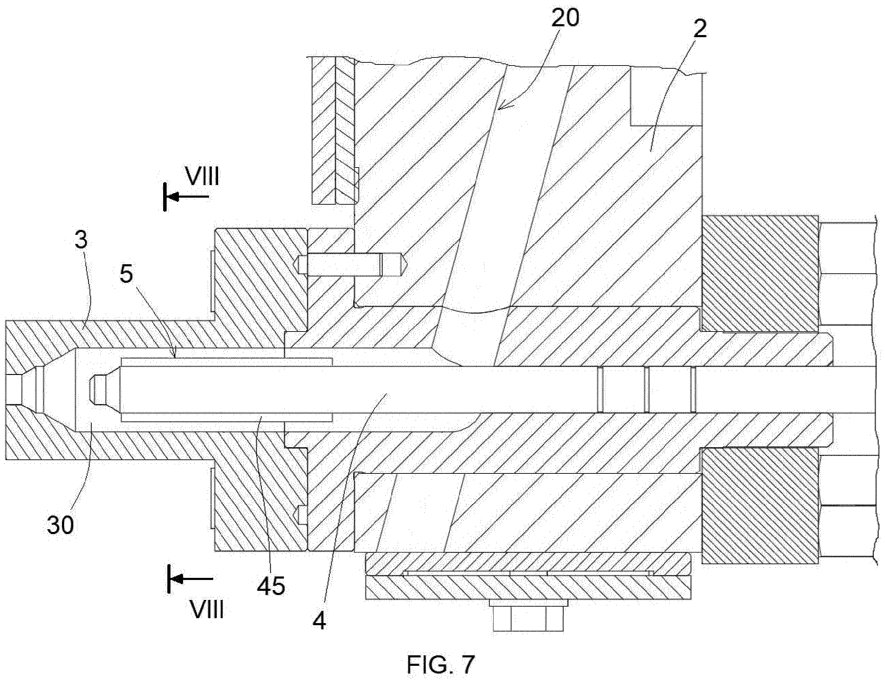

Fig. 7 is an axial view of an injector according to a second embodiment of the invention, in correspondence of the discharge channel, which shows the needle in retracted position;

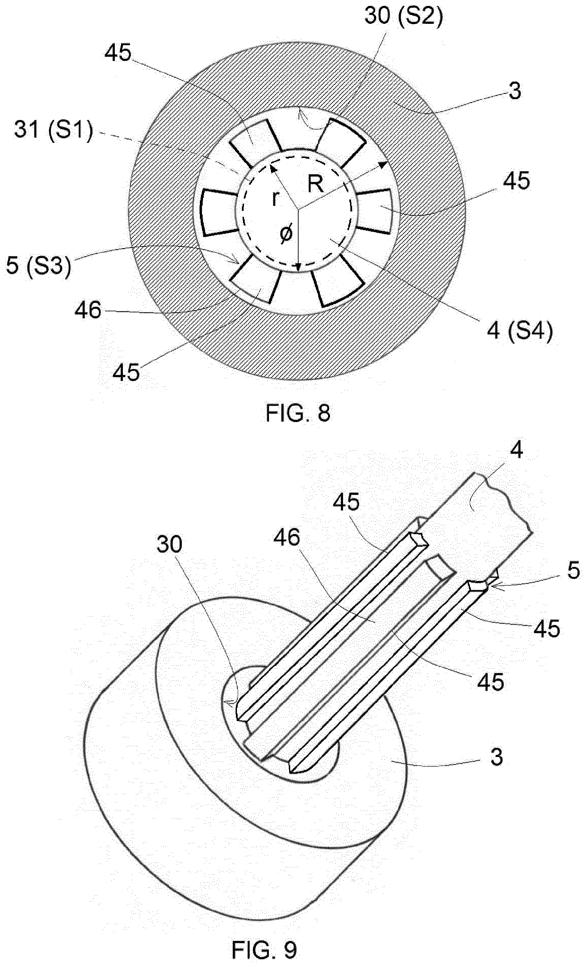

Fig. 8 is a cross-sectional view taken along the plane VIII-VIII of Fig. 7;
Fig. 9 is a perspective view of the portion of injector of Fig. 8.

The injector of the invention has a structure that is substantially similar to the injector (100) of the prior art shown in Fig. 1; therefore, the same reference numerals will be used.

The injector according to the invention comprises a plasticizing cylinder (1) with a plasticizing chamber (10) wherein a plasticizing screw (11) is disposed. The plasticizing chamber (10) communicates with a feeding duct (20) obtained in a manifold (2). The feeding duct (20) communicates with a discharge duct (30) obtained in an injection nozzle (3) suitable for being coupled with a mold.

A needle (4) is moved axially in the discharge duct (30), said needle (4) being suitable for closing an outlet hole (31) of the discharge duct. The needle (4) is actuated by an actuator (40). The needle travels according to a preset distance from a retracted position, wherein the plastic material passes through the outlet hole, to an advanced position, wherein the needle closes the outlet hole.

A gap is provided between the needle and the discharge duct.

According to the invention, volume reduction means (5) are disposed in the discharge duct, being suitable for reducing the volume of the gap between the needle and the discharge duct, in such a way to minimize the volume of the air that can be trapped in said gap between the needle and the discharge duct. Moreover, said volume reduction means contribute to create discontinuity lines in the material. In view of the above, only a minimum quantity of air is trapped in the plastic material injected in the mold, and will be easily evacuated because of the discontinuity lines created in the plastic material, reducing or completely eliminating the bubbles and the channels that impair the quality of the molded product.

The volume reduction means (5) radially protrude from a body of the injection nozzle (3) and/or from the needle (4). If the volume reduction means (5) are in the body of the injector, said volume reduction means (5) are spaced apart from the needle (4) and do not touch the needle.

If said volume reduction means (5) are in the needle, said volume reduction means are spaced apart from the internal walls of the discharge conduit (30) and do not touch the internal walls of the discharge conduit (30).

The volume reduction means (5) do not rub against the needle or against the internal walls of the discharge duct, and therefore no wear of the volume reduction means, the needle (4) or the internal walls of the discharge duct (30) is originated.

Said volume reduction means (5) are disposed in the discharge duct (30) downstream the feeding duct (20) of the manifold and extend longitudinally until the outlet hole (31) of the discharge duct.

The volume reduction means (5) have a length in axial direction that is higher than the travel of the needle (4), meaning the distance covered by the needle (4) in axial translation, when the needle goes from its retracted position to its advanced position. In view of the above, the volume reduction means (5) always generate a reduction of the volume of the discharge duct (30) during the axial translation of the needle.

With reference to Figs. 4, 5 and 6, according to a first embodiment of the invention, the volume reduction means (5) are longitudinal tongues (35) that radially protrude inwards from the body of the injector (3). Said longitudinal tongues (35) of the body of the injection nozzle must not interfere with the needle (4) and must permit a free translation of the needle. For this reason, the longitudinal tongues (35) are spaced apart from the needle (4), in such a way that the needle (4) does not receive any wear from rubbing against the longitudinal tongues (35).

For illustrative purpose, six longitudinal tongues (35) are provided and disposed equidistantly by an angle of 60°. Each longitudinal tongue (35) is shaped as a portion of a sector of a circle with a central angle of approximately 30°-50°.

Each longitudinal tongue (35) has a surface (36) shaped as a portion of circumference that is directed towards the axis of the discharge duct (30). Such a surface (36) shaped as a portion of circumference has its center in the axis of the discharge duct and a radius of curvature that is slightly higher than the radius of the needle (4) in such a way as not to touch the needle.

With reference to Figs. 7, 8 and 9, according to a second embodiment of the invention, the volume reduction means (5) are longitudinal tongues (45) that radially protrude outwards from the body of the injector (4). Obviously, said longitudinal tongues (45) of the needle (4) must not interfere with the body of the injection nozzle (3) and must permit a free translation of the needle. For this reason, the longitudinal tongues (45) of the needle (4) are spaced apart from the internal walls of the discharge duct (30), in such a way that the internal walls of the discharge duct (30) do not touch the longitudinal tongues of the needle and do not suffer any wear because of the rubbing of the longitudinal tongues (45) of the needle.

For illustrative purpose, six longitudinal tongues (45) are provided and equidistantly disposed by an angle of 60°. Each longitudinal tongue (45) of the needle is shaped as a portion of a sector of a circle with a central angle of approximately 30°-50°.

Each longitudinal tongue (45) of the needle has a surface (46) shaped as a portion of circumference that is directed towards the discharge duct (30). Said surface (46) shaped as a portion of circumference has its center in the axis of the discharge duct and a radius of curvature slightly lower than the radius of the discharge duct (30).

With reference to Figs. 5 and 8, the outlet hole (31) of the discharge duct has a circular surface (S1) in cross-section, given by the formula S1=Πr², where r is the radius of the outlet hole (31).

The discharge duct (30) has a circular surface (S2) in cross-section, given by the formula S2=Πr², where R is the radius of the discharge duct (30).

The volume reduction means (5) have a total surface (S3) in cross-section, given by the sum of the surface of each longitudinal tongue (35; 45).

The needle (4) has a circular surface (S4) in cross-section, given by the formula S4=Πφ², where φ is the radius of the needle (4).

In order to avoid trapping air bubbles in the flow of plastic material, the passage surface of the plastic material must be lower than or equal to the surface of the outlet hole (31).

The passage surface of the plastic material is given by the surface (S2) of the discharge duct minus the surface (S3) of the volume reduction means (5), minus the surface (S4) of the needle, i.e.: S2 - S3 - S4.

Therefore, the following geometrical relation must be satisfied:
(S2 - S3 - S4) ≤ S1.

So, the total surface of the tongues and the number of tongues that form the volume reduction means must be chosen in such a way as to satisfy the aforesaid relation.

In view of the above, when the needle (4) is moved backwards, the air contained in the injection nozzle (3) can be extracted by means of extraction means that create the vacuum in the mold connected to the injection mold. In fact, given that the passage surface of the plastic material (S2 - S3 - S4) is lower than the surface (S1) of the outlet hole (31), when the needle (4) is moved backwards, the outlet hole (31) is not immediately closed by the mass of plastic material to be injected, thus allowing the air to be ejected from the nozzle.

Although not shown in the figures, the volume reduction means (5) may comprise both longitudinal tongues that are integral with the body of the injector (3) and longitudinal tongues that are integral with the needle (4). In such a case, the longitudinal tongues of the injector are alternated with the longitudinal tongues of the needle.

The number or the dimension of the tongues can be higher or lower than the number and the dimension of the tongues shown in the illustrative drawings, in such a way that the passage surface is equal to or even lower than the outlet hole (31) of the discharge duct.

## Claims

1. Injector for injection molding, comprising:
- a plasticizing cylinder (1) with a plasticizing chamber (10) wherein a plasticizing screw (11) is disposed,
- a collector (2) having a feeding duct (20) in communication with the plasticizing chamber (10),
- an injection nozzle (3) having a discharge duct (30) in communication with said feeding duct (20), and
- a needle (4) that is moved axially in the discharge duct (30) to close an outlet hole (31) of the discharge duct, passing from a retracted position to an advanced position;
wherein a gap is provided between the needle (4) and the discharge duct (30),
- volume reduction means (5) disposed in the discharge duct and suitable for reducing the volume of the gap between the needle and the discharge duct, in such a way to minimize the air volume that can be trapped in said gap between needle and discharge duct; said volume reduction means (5) radially protruding from a body of said injection nozzle (3) and/or said needle (4);
when said volume reduction means (5) are integral with the body of the nozzle, they are spaced apart from said needle (4) and they do not touch the needle;
when said volume reduction means (5) are integral with said needle, they are spaced apart from the internal walls of the discharge conduit (30) and they do not touch the internal walls of the discharge duct,
so that said volume reduction means (5) cannot cause the wear of said needle (4) or of said walls of the discharge duct (30);
wherein said outlet hole (31) of the discharge duct has a surface (S1) in cross section, said discharge duct (30) has a surface (S2) in cross section, said volume reduction means (5) have a surface (S3) in cross section, and said needle (4) has a surface (S4) in cross section;
**characterized in that**
the flow passage surface given by the surface (S2) of the discharge ducts minus the surface (S2) of the volume reduction means minus the surface (S3) of the nozzle (4) being lower than or equal to the surface (S1) of the outlet hole (31) of the discharge duct.

2. The injector of claim 1, wherein said volume reduction means (5) are disposed in the discharge duct (30) downstream the feeding duct (20) of the manifold, extending longitudinally until the outlet hole (31) of the discharge duct.

3. The injector of claim 2, wherein said volume reduction means (5) have a higher length than a distance traveled by the needle (4) in axial translation when the needle passes from the retracted position to the advanced position.

4. The injector of anyone of the preceding claims, wherein said volume reduction means (5) comprise longitudinal tongues (35, 45) that protrude radially from a body of said injection nozzle (3) and/or from said needle (4).

5. The injector of claim 4, wherein said volume reduction means (5) are longitudinal tongues (35) that radially protrude inwards from the body of the injector (3).

6. The injector of claim 5, wherein said volume reduction means (5) are six longitudinal tongues (35) that are equally spaced by an angle of 60°.

7. The injector of claim 6, wherein each longitudinal tongue (35) of the body of the injector is shaped as a portion of a sector of a circle with a central angle of 30°-50°.

8. The injector of claim 7, wherein each longitudinal tongue (35) of the body of the injector has a surface (36) shaped as a portion of circumference directed towards the axis of the discharge duct (30); said surface (36) shaped as a portion of circumference having its center in the axis of the discharge duct and a radius of curvature slightly higher than the radius of the needle (4).

9. The injector of claim 4, wherein said volume reduction means (5) are longitudinal tongues (45) that protrude radially outwards from the needle (4).

10. The injector of claim 9, wherein said volume reduction means (5) are six longitudinal tongues (45) that are equally spaced by an angle of 60°.

11. The injector of claim 9 or 10, wherein each longitudinal tongue (45) of the needle is shaped as a portion of a sector of a circle with a central angle of 30°-50°.

## Patentansprüche

1. Injektor zum Spritzgießen, umfassend:
- einen Plastifizierzylinder (1) mit einer Plastifizierkammer (10), in der eine Plastifizierschnecke (11) angeordnet ist,
- einen Sammler (2) mit einer Zuführleitung (20), die mit der Plastifizierkammer (10) in Verbindung steht,
- eine Einspritzdüse (3) mit einer Abführleitung (30), die mit der Zuführleitung (20) in Verbindung steht, und
- eine Nadel (4), die axial in der Abführleitung (30) bewegt wird, um eine Auslassöffnung (31) der Abführleitung zu verschließen und von einer zurückgezogenen Position in eine vorgeschobene Position übergeht;
wobei zwischen der Nadel (4) und der Abführleitung (30) ein Zwischenraum vorgesehen ist,
- Mengenreduziermittel (5), die in der Abführleitung angeordnet und dazu geeignet sind, die Menge des Zwischenraums zwischen der Nadel und der Abführleitung zu reduzieren, um die in dem Zwischenraum zwischen der Nadel und der Abführleitung einschließbare Luftmenge zu minimieren; wobei die Mengenreduziermittel (5) aus einem Körper der Einspritzdüse (3) und/oder aus der Nadel (4) radial nach außen ragen;
wenn die Mengenreduziermittel (5) einstückig mit dem Düsenkörper sind, sind sie von der Nadel (4) beabstandet und berühren die Nadel nicht;
wenn die Mengenreduziermittel (5) einstückig mit der Nadel sind, sind sie von den Innenwänden der Abführleitung (30) beabstandet und berühren die Innenwände der Abführleitung nicht,
so dass die Mengenreduziermittel (5) keine Abnutzung an der Nadel (4) oder an den Innenwänden der Abführleitung (30) verursachen;
wobei die Auslassöffnung (31) der Abführleitung eine Fläche (S1) im Querschnitt aufweist, die Abführleitung (30) eine Fläche (S2) im Querschnitt aufweist, die Mengenreduziermittel (5) eine Fläche (S3) im Querschnitt aufweisen und die Nadel (4) eine Fläche (S4) im Querschnitt aufweisen;
**dadurch gekennzeichnet, dass**
die sich durch die Fläche (S2) der Abführleitung ergebende Strömungsdurchgangsfläche minus der Fläche (S2) der Mengenreduziermittel, minus der Fläche (S3) der Düse (4) kleiner oder gleich der Fläche (S1) der Auslassöffnung (31) der Abführleitung ist.

2. Injektor nach Anspruch 1, wobei die Mengenreduziermittel (5) in der Abführleitung (30), stromab der Zuführleitung (20) des Sammlers angeordnet sind und sich in Längsrichtung bis zur Auslassöffnung (31) der Abführleitung erstrecken.

3. Injektor nach Anspruch 2, wobei die Mengenreduziermittel (5) eine größere Länge aufweisen als eine Wegstrecke ist, die die Nadel (4) in axialer Verschiebung zurücklegt, wenn die Nadel von der zurückgezogenen Position in die vorgeschobene Position übergeht.

4. Injektor nach einem der vorstehenden Ansprüche, wobei die Mengenreduziermittel (5) Längslaschen (35, 45) umfassen, die aus einem Körper der Einspritzdüse (3) und/oder aus der Nadel (4) radial nach außen ragen.

5. Injektor nach Anspruch 4, wobei die Mengenreduziermittel (5) Längslaschen (35) sind, die aus dem Körper des Injektors (3) radial nach innen ragen.

6. Injektor nach Anspruch 5, wobei die Mengenreduziermittel (5) sechs Längslaschen (35) sind, die in einem Winkel von 60° gleichmäßig voneinander beabstandet sind.

7. Injektor nach Anspruch 6, wobei jede Längslasche (35) des Körpers des Injektors als ein Abschnitt eines Kreissektors mit einem Mittelpunktswinkel von 30°-50° ausgebildet ist.

8. Injektor nach Anspruch 7, wobei jede Längslasche (35) des Körpers des Injektors als eine als Kreisumfangsabschnitt ausgebildete Fläche (36) aufweist, die zur Achse der Abführleitung (30) gerichtet ist; wobei die als Kreisumfangsabschnitt ausgebildete Fläche (36) ihren Mittelpunkt auf der Achse der Abführleitung und einen Krümmungsradius aufweist, der etwas größer als der Radius der Nadel (4) ist.

9. Injektor nach Anspruch 4, wobei die Mengenreduziermittel (5) Längslaschen (45) sind, die aus der Nadel (4) radial nach außen ragen.

10. Injektor nach Anspruch 9, wobei die Mengenreduziermittel (5) sechs Längslaschen (45) sind, die im Winkel von 60° gleichmäßig voneinander beabstandet sind.

11. Injektor nach Anspruch 9 oder 10, wobei jede Längslasche (45) der Nadel als ein Abschnitt eines Kreissektors mit einem Mittelpunktswinkel von 30°-50° ausgebildet ist.

## Revendications

1. Injecteur pour moulage à injection comprenant :
- un cylindre de plastification (1) ayant une chambre de plastification (10) dans laquelle une vis de plastification (11) est disposée,
- un collecteur (2) ayant un conduit d'alimentation (20) en communication avec la chambre de plastification (10),
- une buse d'injection (3) ayant un conduit de décharge (30) en communication avec conduit d'alimentation (20), et
- une aiguille (4) qui se déplace axialement dans le conduit de décharge (30) pour fermer un orifice de sortie (31) du conduit de décharge, en passant d'une position rétractée à une position avancée ;
où un écartement est prévu entre l'aiguille (4) et le conduit de décharge (30),
- des moyens de réduction du volume (5) disposés dans le conduit de décharge et aptes à réduire le volume de l'écartement entre l'aiguille et le conduit de décharge, de façon à minimiser le volume d'air emprisonné dans ledit écartement entre ladite aiguille et ledit conduit de décharge ; lesdits moyens de réduction du volume (5) faisant saillie radialement d'un corps de ladite buse d'injection (3) et/ou de ladite aiguille (4) ;
quand lesdits moyens de réduction du volume (5) sont solidaires au corps de la buse, ils sont distanciés de ladite aiguille (4) et ils ne touchent pas l'aiguille ;
quand lesdits moyens de réduction du volume (5) sont solidaires à ladite aiguille, ils sont distanciés des parois internes du conduit de décharge (30) et ils ne touchent pas les parois internes du conduit de décharge,
de sorte que lesdits moyens de réduction du volume (5) ne causent pas l'usure de ladite aiguille (4) ou des dites parois internes du conduit de décharge (30) ;
où ledit orifice de sortie (31) du conduit de décharge a une superficie (S1) en section transversale, ledit conduit de décharge (30) a une superficie (S2) en section transversale, lesdits moyens de réduction du volume (5) ont une superficie (S3) en section transversale et ladite aiguille (4) a une superficie (S4) en section transversale ;
**caractérisé en ce que**
la superficie de passage du fluide donnée par la superficie (S2) du conduit de décharge, moins la superficie (S2) des moyens de réduction du volume, moins la superficie (S3) de la buse (4) étant mineure ou égale à la superficie (S1) de l'orifice de sortie (31) du conduit de décharge.

2. Injecteur selon la revendication 1, où lesdits moyens de réduction du volume (5) sont disposés dans le conduit de décharge (30) en aval du conduit d'alimentation (20) du collecteur et se déploient longitudinalement jusqu'à l'orifice de sortie (31) du conduit de décharge.

3. Injecteur selon la revendication 2, où lesdits moyens de réduction du volume (5) ont une longueur majeure d'une distance parcourue par l'aiguille (4) en translation axiale quand elle passe de la position rétractée à la position avancée.

4. Injecteur selon l'une quelconque des revendications précédentes, où lesdits moyens de réduction du volume (5) comprennent des ailettes longitudinales (35, 45) qui font saillie radialement d'un corps de ladite buse d'injection (3) et/ou de ladite aiguille (4).

5. Injecteur selon la revendication 4, où lesdits moyens de réduction du volume (5) sont des ailettes longitudinales (35) qui font saillie radialement vers l'intérieur du corps de l'injecteur (3).

6. Injecteur selon la revendication 5, où lesdits moyens de réduction du volume (5) sont six ailettes longitudinales (35), régulièrement espacées d'un angle de 60°.

7. Injecteur selon la revendication 6, où chaque ailette longitudinale (35) du corps de l'injecteur a la forme d'une portion de secteur circulaire avec un angle au centre de 30-50°.

8. Injecteur selon la revendication 7, où chaque ailette longitudinale (35) du corps de l'injecteur a une superficie (36) en forme d'une portion de circonférence orientée vers l'axe du conduit de décharge (30) ; ladite superficie (36) en forme de portion de circonférence ayant son centre dans l'axe du conduit de décharge et un rayon de courbure légèrement majeur du rayon de l'aiguille (4).

9. Injecteur selon la revendication 4, où lesdits moyens de réduction du volume (5) sont des ailettes longitudinales (45) qui font saillie radialement vers l'extérieur de l'aiguille (4).

10. Injecteur selon la revendication 9 où lesdits moyens de réduction du volume (5) sont six ailettes longitudinales (45), régulièrement espacées d'un angle de 60°.

11. Injecteur selon la revendication 9 ou 10, où chaque ailette longitudinale (45) de l'aiguille a la forme d'une portion de secteur circulaire avec un angle au centre de 30-50°.
